# DEMANDE DE BREVET EUROPEEN

(11) **EP 1 016 564 A1**
(43) Date de publication de la demande: **05.07.2000**
(21) Numéro de dépôt: 99402984.1
(22) Date de dépôt: 30.11.1999
(51) Int. Cl.: B60P 1/44

(54) **Hayon élévateur rétractable**

(30) Priorité: 01.12.1998 FR 9815118
(71) Demandeur: Compagnie Erhel Hydris, 21000 Dijon (FR)
(72) Inventeur: Lamort de Gail, Marc, 75016 Paris (FR)
(74) Mandataire: Dawidowicz, Armand

(57) **Abrégé**

L'invention concerne un hayon élévateur rétractable pour véhicule industriel ou commercial, comprenant un organe de levage (7) monté articulé autour d'un axe (8) orthogonal à la direction longitudinale (6) du véhicule (4) et portant une plate-forme (1, 2) articulée autour d'un axe (5) parallèle à l'axe (8), l'organe de levage (7) étant commandé en pivotement autour de son axe d'articulation (8) par un moyen de levage.

L'invention consiste en ce que l'organe de levage (7) est constitué d'au moins un couple de bras (10, 11 ; 10', 11') articulés entre eux autour d'une articulation (12, 12') orthogonale à l'axe d'articulation (8) de l'organe de levage (7), l'extrémité libre d'un bras du couple étant pivotante autour d'un axe (17, 17') parallèle à l'articulation des bras, cet axe (17, 17') étant porté par une pièce (15, 15') montée pivotante autour de l'axe d'articulation (8), fixe par rapport au véhicule, de l'organe de levage (7), l'extrémité libre de l'autre bras du couple étant pivotante autour d'un axe (18, 18') parallèle aux axes d'articulation (12, 12') des bras, cet axe (18, 18') étant porté par une pièce (16, 16') montée pivotante autour de l'axe d'articulation (5) de la plate-forme (1, 2) sur l'organe de levage (7), au moins un bras (10, 10' ; 11, 11') d'au moins un couple (10, 11 ; 10', 11') étant soumis à l'action d'un vérin (21, 22, 22', 26) dont la tige (20, 20') est articulée, à son extrémité libre, autour d'un axe (19, 19') parallèle à l'axe d'articulation (12, 12') des bras entre eux, sur le bras respectif, et dont le corps est fixé en translation par rapport au véhicule.

Application aux hayons pour véhicules industriels ou commerciaux.

## Description

La présente invention concerne un hayon élévateur rétractable pour véhicule automobile.

Habituellement, les hayons élévateurs comprennent un organe de levage, tel qu'une poutre ou un cadre de levage, à l'extrémité extérieure duquel est articulée une plate-forme, en général repliable, l'organe de levage étant inclinable autour d'un axe voisin de son extrémité intérieure, l'inclinaison de l'organe de levage étant commandée par au moins un vérin.

Pour permettre de rétracter la plate-forme sous le véhicule, on a proposé de monter l'organe de levage, ou un tube porteur sur lequel est articulée son extrémité intérieure, sur des coulisses et de commander le déplacement de l'organe de levage sur ces coulisses par un vérin de rétraction, par une association de deux vérins, par un système pignon/crémaillère associé à un moteur réducteur, ou un système vis/écrou.

Cet ensemble connu présente divers inconvénients, en particulier d'encombrement, de complexité et de poids liés à la superposition des glissières, du vérin de rétraction et de l'organe de levage. Un autre inconvénient réside dans le fait que la plate-forme ne peut être déployée que dans l'axe du véhicule, ce qui rend difficiles et pénibles les opérations de chargement ou de déchargement sur un trottoir ou un quai latéral par rapport au véhicule.

La présente invention vise en conséquence à pallier ces inconvénients des hayons rétractables connus.

A cet effet, l'invention a pour objet un hayon élévateur rétractable pour véhicule industriel ou commercial, du type comprenant un organe de levage monté articulé, au voisinage de son bord intérieur ou avant, autour d'un axe orthogonal à la direction longitudinale du véhicule, ledit organe de levage portant, au voisinage de son bord extérieur, une plate-forme articulée autour d'un axe parallèle à l'axe d'articulation de l'organe de levage et montée mobile de manière à rester sensiblement horizontale dans toutes les positions angulaires de l'organe de levage sous l'action d'au moins un organe d'inclinaison, l'organe de levage étant commandé en pivotement autour de son axe d'articulation par un moyen de levage, caractérisé en ce que l'organe de levage est constitué d'au moins un couple de bras articulés entre eux autour d'une articulation orthogonale à l'axe d'articulation de l'organe de levage, l'extrémité libre d'un bras du couple étant pivotante autour d'un axe parallèle à l'articulation des bras, cet axe étant porté par une pièce montée pivotante autour de l'axe d'articulation, fixe par rapport au véhicule, de l'organe de levage, l'extrémité libre de l'autre bras du couple étant pivotante autour d'un axe parallèle aux axes d'articulation des bras, cet axe étant porté par une pièce montée pivotante autour de l'axe d'articulation de la plate-forme sur l'organe de levage, au moins un bras d'au moins un couple étant soumis à l'action d'au moins un vérin dont la tige est articulée, à son extrémité libre, autour d'un axe parallèle aux axes d'articulation des bras entre eux, sur le bras respectif, et dont le corps est fixé en translation par rapport au véhicule.

Le corps de levage, dans le hayon selon l'invention, ne subit donc pas de translation d'ensemble, son axe d'articulation étant fixe par rapport au véhicule. C'est seulement l'axe d'articulation de la plate-forme qui, pour amener le hayon d'une position rétractée à une position de travail et inversement, subit une translation par l'action du ou des vérins de commande des bras de l'organe de levage. Cette action produit un pivotement de chaque bras autour de ses deux axes, les bras d'un ou de chaque couple étant dans le prolongement l'un de l'autre en position de travail et se repliant progressivement l'un contre l'autre au cours du passage de la position de travail à la position escamotée. On obtient ainsi une structure plus simple et plus compacte pour l'ensemble du hayon, la suppression des glissières entraînant en outre une rigidité et une résistance mécanique améliorées.

Selon une première forme de réalisation, l'organe de levage comporte un seul couple de bras. On peut ainsi installer plus facilement ce hayon élévateur rétractable sur des véhicules plus petits.

Selon une deuxième forme de réalisation, l'organe de levage est constitué de deux couples de bras, les articulations de chaque couple de bras étant parallèles entre elles et deux bras homologues dans chaque couple sont soumis à l'action d'un vérin.

Selon une variante de réalisation préférée de l'invention, le corps du vérin agissant sur le bras d'un couple est articulé autour d'un point fixe de l'organe de levage. Cette disposition permet, par des déploiements inverses des tiges de vérin, de somme constante, de faire pivoter d'un même angle les deux couples de bras alignés et d'amener ainsi l'organe de levage, et avec lui la plate-forme, à une position de travail décalée latéralement par rapport à l'axe du véhicule. Il est ainsi possible d'amener la plate-forme sur un trottoir ou un quai le long duquel est garé le véhicule.

Selon une variante d'exécution de l'invention, les bras d'un couple sont articulés entre eux par une articulation double et sont munis, dans la zone d'articulation, d'engrenages complémentaires en prise. On augmente ainsi la précision et la rigidité des articulations entre les bras.

Selon une autre variante d'exécution, l'articulation entre les bras d'un couple est une articulation simple comprenant des moyens de butée limitant son débattement en position de travail.

De préférence, des moyens de guidage sont associés à un couple de bras de manière à guider le pivotement desdits bras autour de leurs articulations. Ces moyens de guidage peuvent être constitués par une première bielle s'étendant parallèlement à un bras du couple de bras, ladite bielle étant montée pivotante autour d'un axe d'articulation fixe par rapport au véhicule et autour d'un axe d'articulation défini sur un flasque d'articulation monté sur l'articulation des deux bras et par une seconde bielle s'étendant parallèlement à l'autre bras du couple de bras, ladite seconde bielle étant pivotante autour d'un axe d'articulation défini sur le flasque d'articulation et d'un axe d'articulation défini sur la plate-forme.

L'invention prévoit, pour un exemple de construction particulièrement simple, qu'un vérin double est interposé entre les bras homologues des couples, chaque tige du vérin double étant articulée sur l'un des bras homologues.

Selon une troisième forme de réalisation, l'organe de levage comporte deux couples de bras, le bras le plus proche du véhicule de l'un des couples de bras étant soumis à l'action du vérin tandis que le corps d'un second vérin est également monté articulé autour d'un axe parallèle à l'axe d'articulation des deux bras sur ledit bras et dont la tige est articulée à son extrémité libre sur l'une des branches d'un compas formé de deux branches dont les extrémités libres sont montées respectivement sur un bras du couple de bras, une barre de guidage s'étendant articulée entre deux bras homologues des deux couples, l'actionnement des vérins permettant le pivotement des bras du couple autour de leur axe d'articulation ainsi que celui de l'autre couple autour de son axe d'articulation par l'intermédiaire de la barre de guidage.

On obtient ainsi un organe de levage dont les couples de bras se replient dans le même sens ce qui peut être utile pour leur installation sur certaines configurations de véhicules.

Les bras homologues de deux couples de bras doivent présenter la même longueur. Au sein d'un couple, les bras peuvent être de même longueur ou de longueurs différentes.

L'invention sera bien comprise à la lecture de la description suivante d'exemples de réalisation, en référence au dessin annexé dans lequel:
la figure 1 est une vue schématique de dessus d'un hayon selon un premier exemple de réalisation de l'invention, en position travail et plate-forme dépliée, le plancher de véhicule porteur, supposé transparent, étant partiellement figuré,
la figure 2 est analogue à la figure 1, la plate-forme étant repliée,
la figure 3 est une vue de dessus du hayon selon les figures 1 et 2, en cours de rétraction,
la figure 4 est analogue à la figure 3, pour la position en fin de rétraction,
la figure 5 est une position identique à celle de la figure 1, correspondant à une phase préalable à un déchargement/chargement latéral,
la figure 6 est une vue de dessus du hayon de la figure 5, en position de déchargement/chargement latéral,
les figures 7, 8, 9, 9a, 10 et 11 sont analogues à la figure 3, respectivement pour diverses variantes du hayon selon l'invention,
les figures 12a, 12 b et 12c sont des vues schématiques de dessus d'un hayon selon un autre exemple de réalisation de l'invention, en position travail et plate-forme dépliée, en position semi-repliée et en position escamotée.

Dans les représentations schématiques du dessin, on n'a représenté que l'organe de levage, constituant organe d'escamotage, de la plate-forme, les moyens d'inclinaison et de levage, qui peuvent être quelconques, et ne font pas partie de la présente invention, n'étant pas représentés.

Dans les dessins, les mêmes références numériques désignent les mêmes éléments.

Le hayon comprend un plateau 1 muni, dans les exemples décrits et représentés, d'un rabat 2 repliable sur le plateau 1, l'ensemble constituant une plate-forme 1, 2 de chargement-déchargement.

Cette plate-forme 1, 2 est montée, à l'arrière 3 d'un véhicule 4, tel qu'un camion, une remorque, une camionnette, articulée en pivotement autour d'un axe d'articulation 5 orthogonal à la direction longitudinale 6 du véhicule 4.

L'axe d'articulation 5 de la plate-forme 1, 2 est porté par un organe de levage 7, des moyens (non représentés) étant prévus pour maintenir horizontale la plate-forme 1, 2 à l'état déplié ou replié.

L'organe de levage 7 est commandé par des moyens (non représentés) permettant son pivotement autour d'un axe d'articulation 8, parallèle à l'axe 5, porté par deux flasques d'articulation 9, 9' fixés au châssis du véhicule 4.

Conformément à l'invention, l'organe de levage 7 est constitué de deux bras intérieurs ou avant 10, 10' reliés respectivement à deux bras extérieurs ou arrière 11, 11' par une articulation 12, 12' respectivement. Les bras 10, 11 et 10', 11', qui sont tous de même longueur, constituent ainsi deux couples de bras articulés entre eux. Les axes des articulations 12, 12' sont parallèles entre eux et orthogonaux aux axes d'articulation 5, 8.

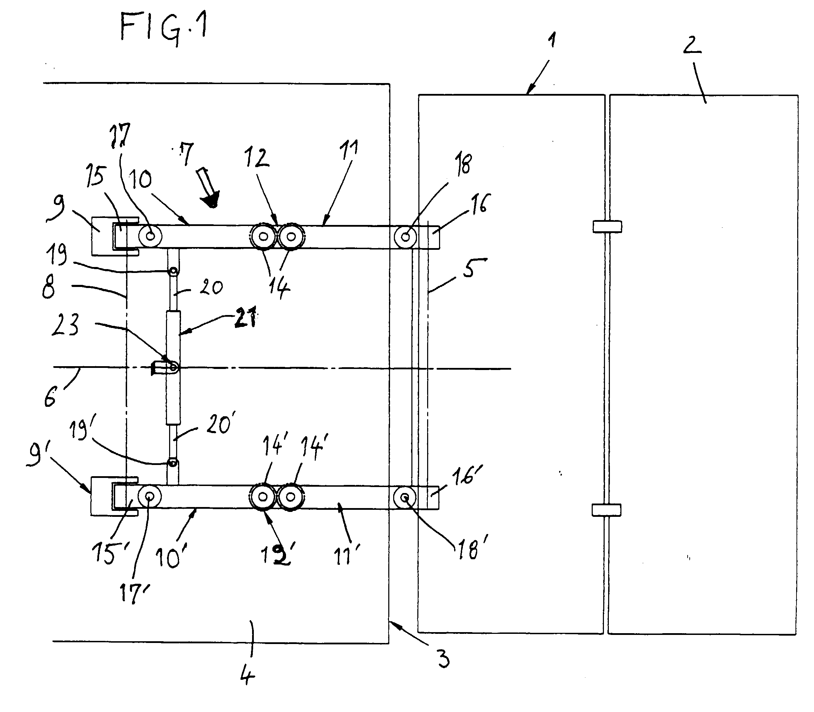

Dans les exemples de réalisation des figures 1 à 7 et 10, les articulations 12, 12' sont doubles et les extrémités adjacentes des bras 10, 11 et 10', 11' respectivement portent chacune un engrenage 14, 14'.

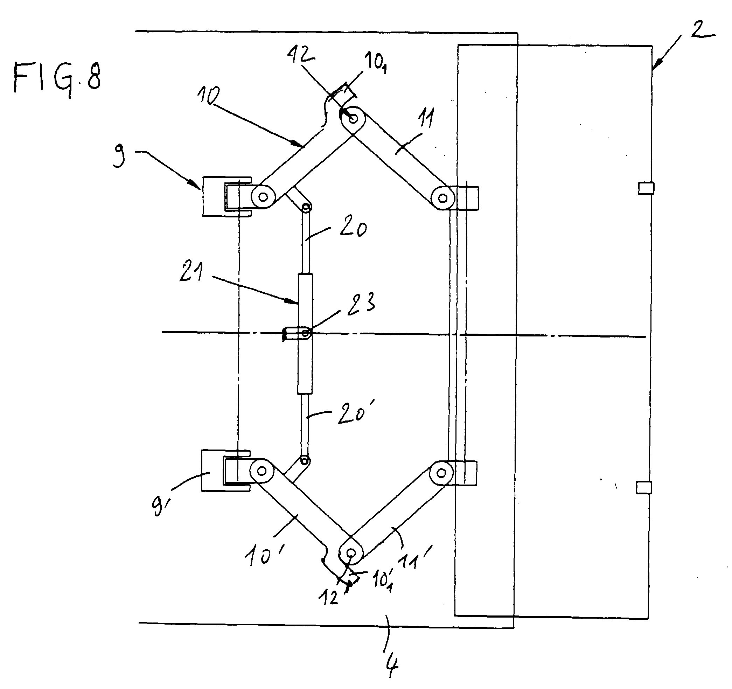

Dans les formes de réalisation des figures 8, 9, 9a et 1, les articulations 12, 12' sont au contraire simples.

Les bras intérieurs 10, 10' sont articulés, à leur extrémité opposée aux articulations 12, 12', respectivement sur une chape 15, 15' montée pivotante sur les flasques 9 autour de l'axe 8.

De même, l'extrémité des bras extérieurs 11, 11' opposée respectivement à l'articulation 12, 12' est articulée sur une chape 16, 16' respective montée pivotante autour de l'axe d'articulation 5 de la plate-forme 1, 2.

Les axes de pivotement 17, 17' des bras intérieurs 10, 10' sur leur chape respective 15, 15', ainsi que les axes de pivotement 18, 18' des bras extérieurs 11, 11', sont parallèles aux axes des articulations 12, 12'.

Conformément à l'invention, les bras intérieurs 10, 10' ou les bras extérieurs 11, 11' sont articulés, autour d'un axe 19, 19', sur une tige 20, 20' d'un vérin, les axes 19, 19' étant parallèles aux axes 17, 17' et 18, 18'.

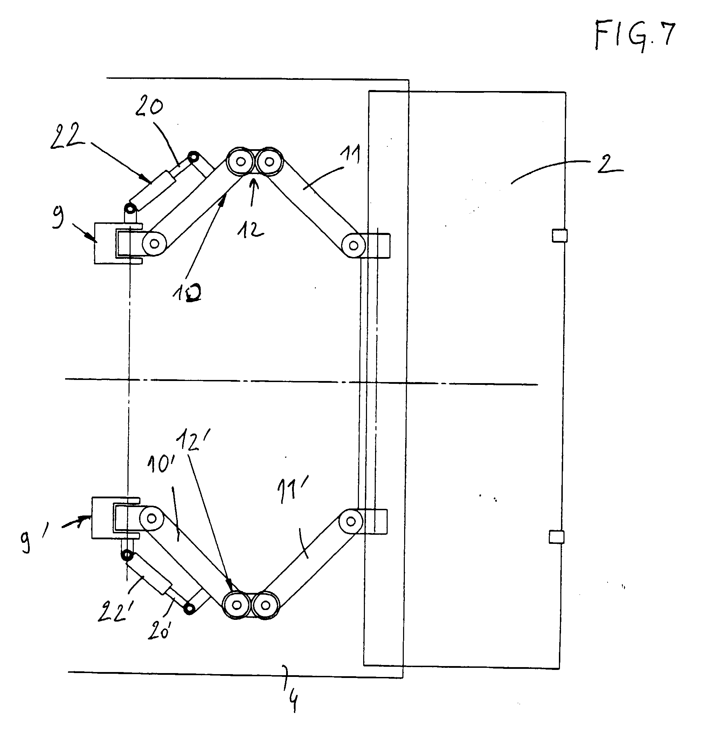

Dans la forme de réalisation des figures 1 à 6 et 8, les tiges 20, 20' font partie d'un vérin double 21 alors que, dans les exemples des figures 7 et 9 à 11, chaque tige fait partie respectivement d'un vérin 22, 22' individuel. Dans tous les cas, le corps du vérin 21, 22 ou 22' est monté pivotant autour d'un axe 23, 24, 24' respectivement, parallèle aux axes 17, 17' et 18, 18' et solidaire du châssis du véhicule 4.

Le fonctionnement de l'organe de levage 7 va être décrit, pour sa fonction d'escamotage-sortie de la plate-forme 1, 2, en référence principalement aux figures 1 à 6, ce fonctionnement étant semblable pour les autres formes de réalisation.

En position de travail (figures 1, 2, 5, 6), les bras 10, 11 et 10', 11' sont maintenus alignés et parallèles entre eux par un déploiement adéquat des tiges 20, 20' du vérin. Tant que ce déploiement est identique (figure 1, 2, 5), les couples de bras sont parallèles à la direction longitudinale 6 du véhicule 4.

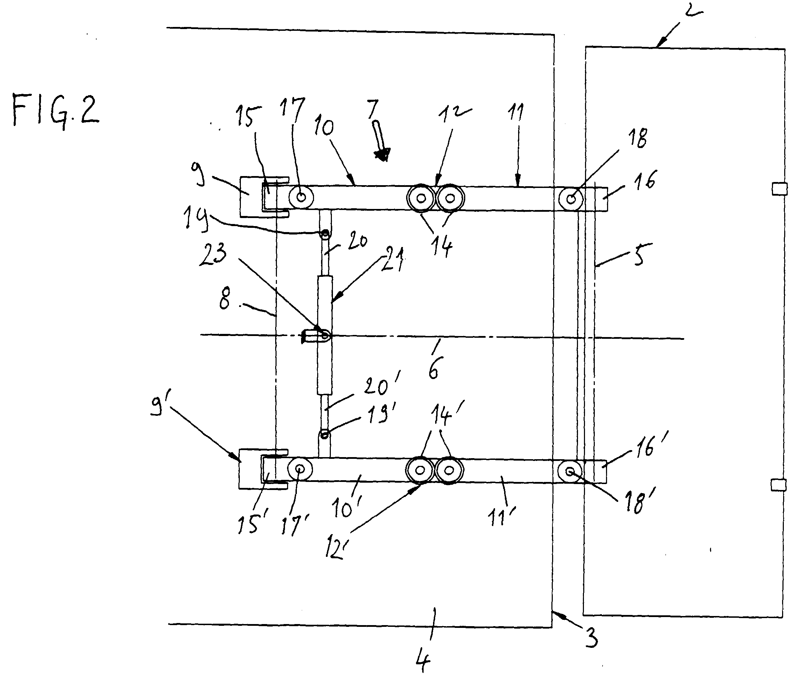

Ainsi, en partant de la position de travail représentée à la figure 1, on commence par rabattre, manuellement ou par des moyens moteurs, le rabat 2 sur le plateau 1 pour arriver à la position de préparation à l'escamotage (rétraction) de la plate-forme 1, 2 représentée à la figure 2.

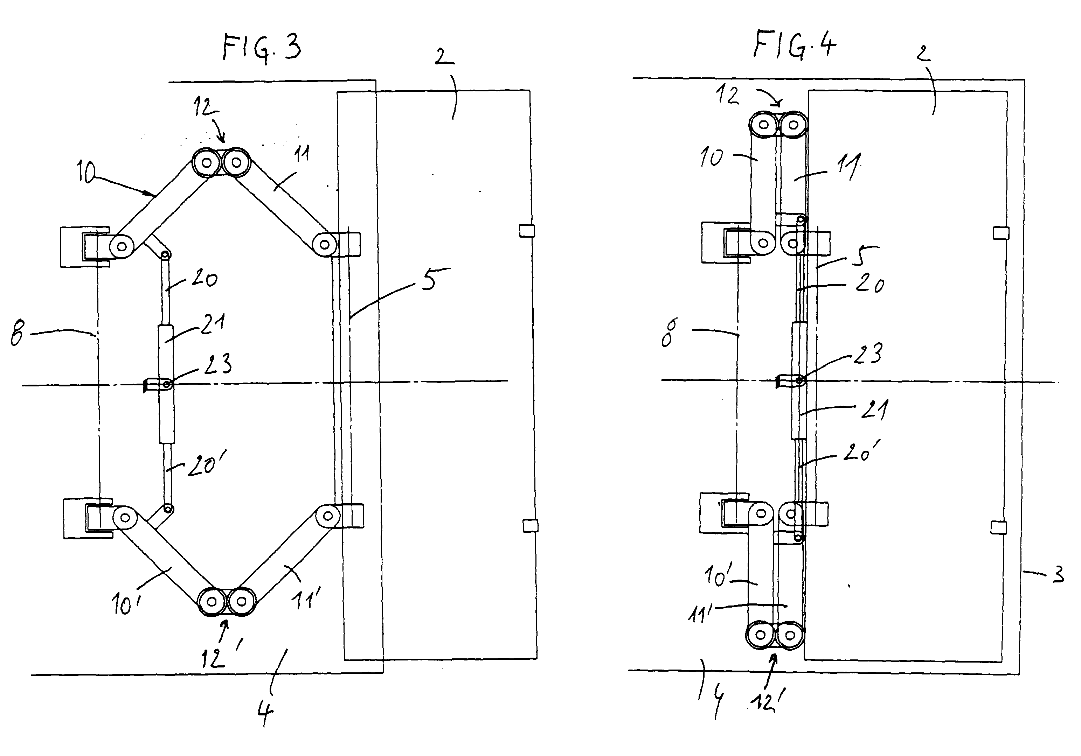

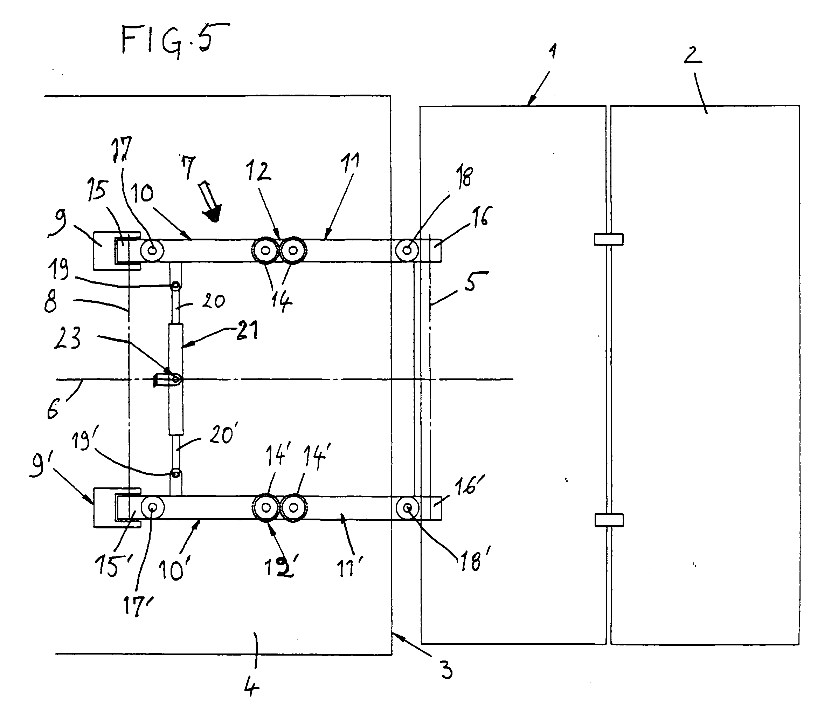

On commande alors le vérin 21 de telle manière que ses tiges 20, 20' se déploient à la même vitesse pour faire pivoter les bras intérieurs 10 et 10' dans des directions opposées et à la même vitesse angulaire (voir figure 3). Au cours de ce déplacement, les bras extérieurs 11 et 11' subissent respectivement un pivotement inverse.

Les couples de bras 10, 11 et 10', 11' se déforment donc de manière symétrique, les articulations 12, 12' s'écartant progressivement de l'axe du véhicule 4 et l'axe d'articulation 5 se déplaçant parallèlement à lui-même en se rapprochant de l'axe d'articulation 8.

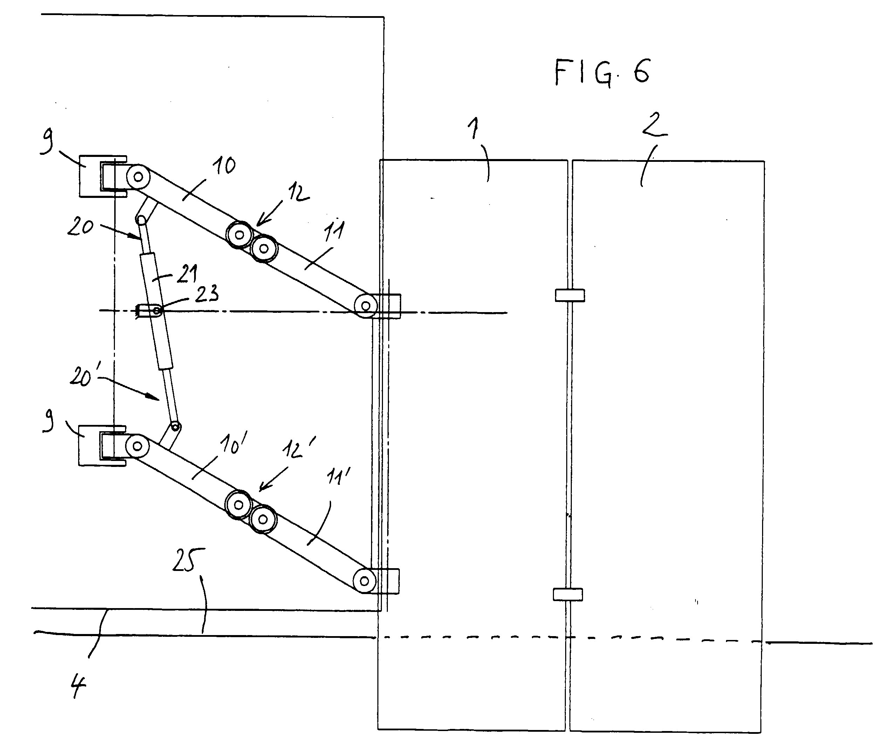

A la fin de ce déplacement (figure 4), les bras 10, 11 et les bras 10', 11' sont venus respectivement les uns contre les autres et la plate-forme 1, 2 est effacée sous le véhicule 4 et ne dépasse plus à l'arrière 3 du véhicule 4.

Le déploiement de la plate-forme 1, 2 se fait par une succession inverse des étapes qui viennent d'être décrites.

A partir de la position de travail, représentée à nouveau à la figure 5, il est possible d'agir sur le vérin 21 pour produire des déplacements inverses des tiges 20, 20', ces déplacements inverses ayant une somme absolue constante et étant donc complémentaires. Le corps du vérin 21 pivotant autour de l'axe 23, les bras 10 et 10' sont alors déplacés dans la même direction, en restant parallèles entre eux, avec les bras 11, 11' restant respectivement dans leur prolongement et on arrive à une position de chargement latéral, par exemple sur un trottoir 25 (figure 6) le long duquel est garé le véhicule 4. La descente de la plate-forme 1, 2 sur ce trottoir permet alors de déposer directement sur le trottoir 25 les charges qui avaient été préalablement déposées du véhicule 4 sur la plate-forme 1, 2. Bien entendu, le chargement depuis le trottoir 25 sur le véhicule 4 se fait par une séquence inverse.

Dans l'exemple de réalisation de la figure 7, les tiges de vérin 20 et 20' appartiennent à deux vérins 22 et 22' indépendants dont le corps est articulé respectivement sur les flasques 9 et 9'. Les déplacements des tiges 20, 20' sont inverses pour le passage à la position de chargement/déchargement latéral.

La variante de la figure 8 est identique à celle des figures 1 à 6, si ce n'est que les articulations 12 et 12' sont des articulations simples, les bras 10 et 10' étant prolongés par des butées 10₁ et 10'₁ limitant respectivement le débattement des articulations 12 et 12' en position de travail.

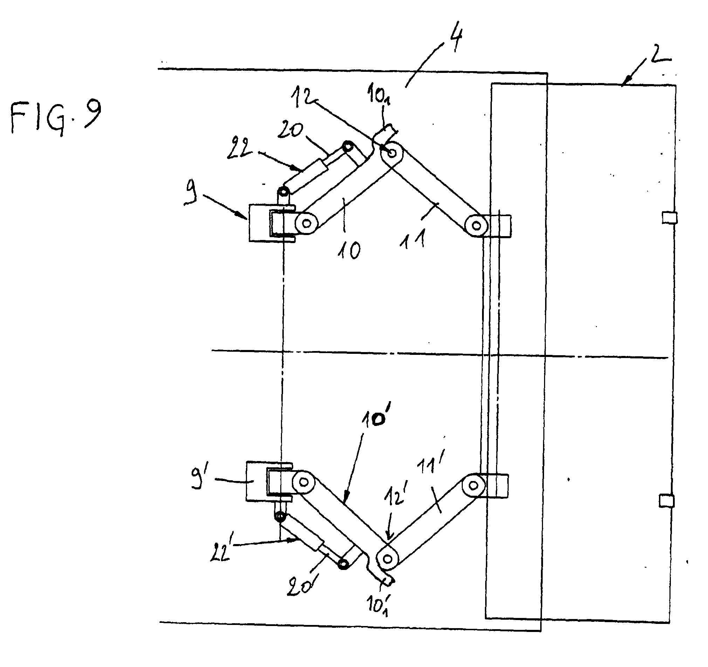

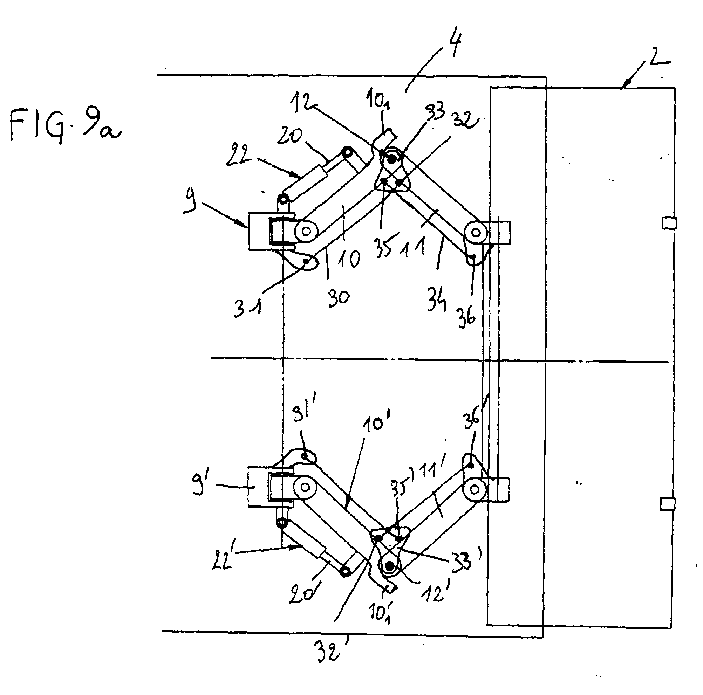

Le hayon de la figure 9 est identique à celui de la figure 7, à la différence près que les articulations 12 et 12' sont des articulations simples avec des butées 10₁ et 10'₁ comme précédemment.

A la figure 9a, on a représenté un hayon identique à celui de la figure 9 mais comportant des moyens de guidage qui comportent une première bielle 30, 30' s'étendant parallèlement le long du bras 10, 10' du couple de bras 10, 11 ; 10', 11'. Cette bielle 30, 30' est montée pivotante autour d'un axe d'articulation 31, 31' fixe par rapport au véhicule et autour d'un axe d'articulation 32, 32' défini sur un flasque d'articulation 33 monté sur l'articulation 12, 12' des deux bras 10, 11; 10', 11'. Une seconde bielle 34, 34' s'étend également parallèlement à l'autre bras 11, 11' du couple de bras 10, 11; 10', 11', ladite seconde bielle 34, 34' étant pivotante autour d'un axe d'articulation 35, 35' défini sur le flasque d'articulation 33, 33' et d'un axe d'articulation 36, 36' sur la plate-forme.

Les moyens de guidage peuvent être également des ressorts, par exemple.

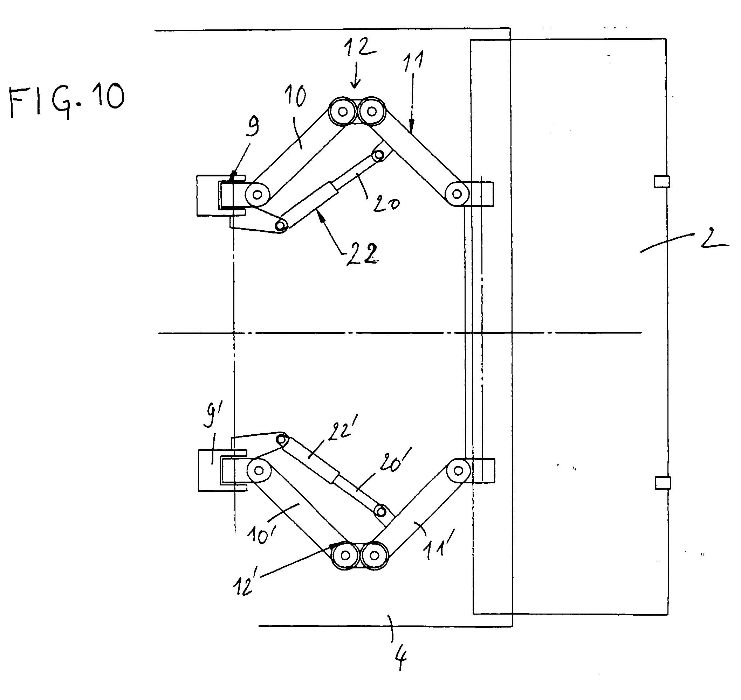

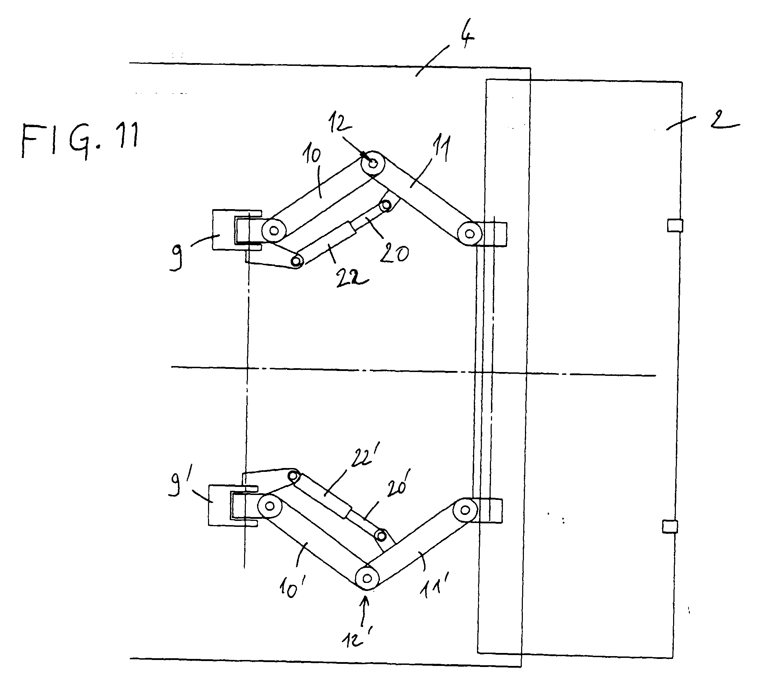

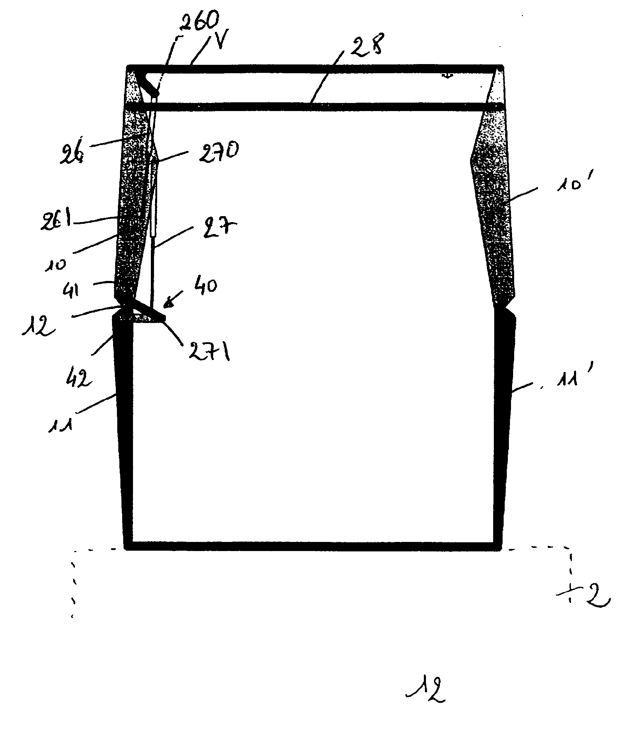

Dans la forme de réalisation des figures 10 et 11, les tiges 20, 21' des vérins 22, 22' sont articulées respectivement sur les bras extérieurs 11, 11' respectivement, les corps de ces vérins 22, 22' étant à nouveau articulés sur les flasques 9, 9' respectivement. Les articulations 12 et 12' sont doubles dans le cas de la figure 10 et simples dans le cas de la figure 11. Dans ce dernier cas, des butées de limitation de débattement ne sont pas nécessaires.

On notera qu'une disposition analogue pourrait être adoptée pour le vérin double 21 dont les tiges 20 et 20' pourraient être articulées sur les bras extérieurs 11 et 11' respectivement.

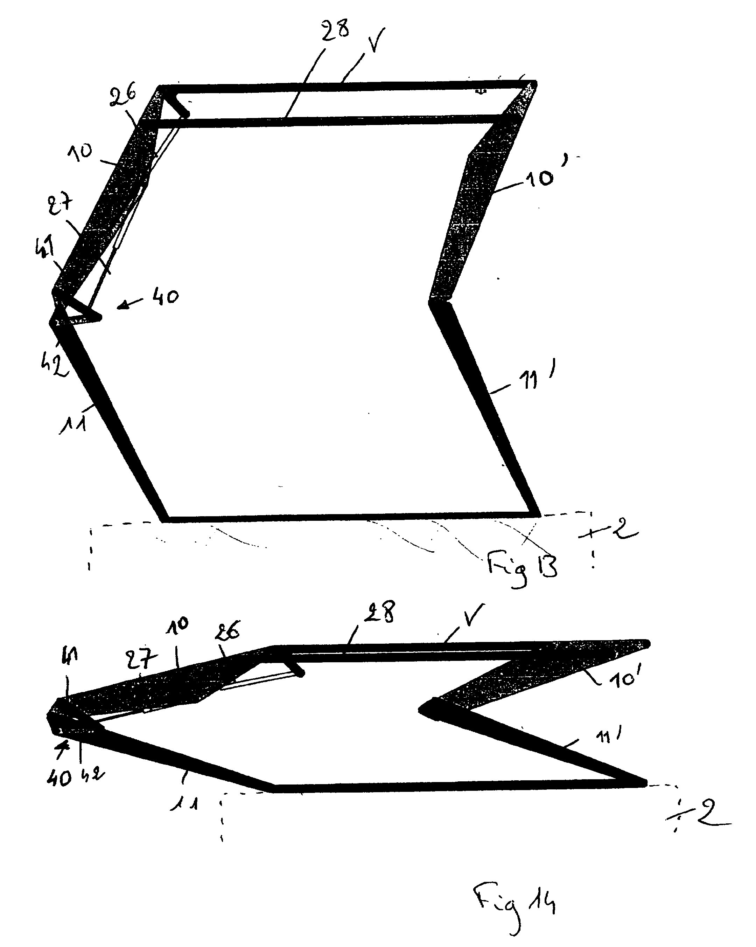

Aux figures 12a, 12b et 12c, on a représenté une variante de réalisation de l'organe de levage 7 qui comporte deux couples de bras 10, 11 ; 10', 11'.

Le bras 10 de l'un des couples de bras est soumis à l'action d'un vérin 26 dont le corps est monté articulé en pivotement autour d'un axe d'articulation 260 fixé par rapport au corps du véhicule V et dont la tige, à son extrémité libre, est articulée sur ledit bras 110 autour d'un axe 261. Le corps d'un second vérin 27 est également monté sur le bras 110 articulé autour d'un axe 270 parallèle à l'axe d'articulation 12 des deux bras 10, 11 et dont la tige est articulée autour d'un axe 271 sur l'une des branches 41 d'un compas 40 formée de deux branches 41, 42 dont les extrémités libres sont montées respectivement sur un bras 10, 11 du couple de bras 10, 11.

Une barre de guidage 28 s'étend entre les deux bras homologues 10, 10' des deux couples, l'actionnement des vérins 26, 27 permettant le pivotement des bras 10, 11 du couple 10, 11 sur lesquels ils sont montés ainsi que celui de l'autre couple 10', 11' par l'intermédiaire de la barre de guidage 28. On obtient ainsi, un pivotement des bras 10,11 et 10', 11' dans la même direction.

## Revendications

1. Hayon élévateur rétractable pour véhicule industriel ou commercial, du type comprenant un organe de levage (7) monté articulé, au voisinage de son bord intérieur ou avant, autour d'un axe (8) orthogonal à la direction longitudinale (6) du véhicule (4), ledit organe de levage (7) portant, au voisinage de son bord extérieur, une plate-forme (1, 2) articulée autour d'un axe (5) parallèle à l'axe d'articulation (8) de l'organe de levage (7) et montée mobile de manière à rester sensiblement horizontale dans toutes les positions angulaires de l'organe de levage (7) sous l'action d'au moins un organe d'inclinaison, l'organe de levage (7) étant commandé en pivotement autour de son axe d'articulation (8) par un moyen de levage,
caractérisé en ce que l'organe de levage (7) est constitué d'au moins un couple de bras (10, 11 ; 10', 11') articulés entre eux autour d'une articulation (12, 12') orthogonale à l'axe d'articulation (8) de l'organe de levage (7), l'extrémité libre d'un bras du couple (10, 11 ; 10', 11') étant pivotante autour d'un axe (17, 17') parallèle à l'articulation des bras (10, 11 ; 10', 11'), cet axe (17, 17') étant porté par une pièce (15, 15') montée pivotante autour de l'axe d'articulation (8), fixe par rapport au véhicule, de l'organe de levage (7), l'extrémité libre de l'autre bras du couple (10, 11 ; 10', 11') étant pivotante autour d'un axe (18, 18') parallèle aux axes d'articulation (12, 12') des bras (10, 11 ; 10', 11'), cet axe (18, 18') étant porté par une pièce (16, 16') montée pivotante autour de l'axe d'articulation (5) de la plate-forme (1, 2) sur l'organe de levage (7), au moins un bras (10, 10' ; 11, 11') d'au moins un couple (10, 11 ; 10', 11') étant soumis à l'action d'au moins un vérin (21, 22, 22', 26) dont la tige (20, 20') est articulée, à son extrémité libre, autour d'un axe (19, 19') parallèle à l'axe d'articulation (12, 12') des bras (10, 11 ; 10', 11') entre eux, sur le bras (10, 10' ; 11, 11') respectif, et dont le corps est fixé en translation par rapport au véhicule.

2. Hayon élévateur rétractable selon la revendication 1,
caractérisé en ce que l'organe de levage est constitué de deux couples de bras, les articulations de chaque couple de bras étant parallèles entre elles, et deux bras homologues dans chaque couple (10, 11 ; 10', 11') sont soumis à l'action d'un vérin (21, 22, 22').

3. Hayon élévateur rétractable selon l'une des revendications 1 et 2,
caractérisé en ce que le corps du vérin (21, 22, 22') agissant sur le bras (10, 10' ; 11, 11') d'un couple est articulé autour d'un point fixe (23) de l'organe de levage (7).

4. Hayon élévateur rétractable selon l'une des revendications 1 à 3,
caractérisé en ce que les bras (10, 11 ; 10', 11') d'un couple sont articulés entre eux par une articulation (12, 12') double et sont munis, dans la zone d'articulation, d'engrenages complémentaires (14, 14') en prise.

5. Hayon élévateur rétractable selon l'une des revendications 1 à 3,
caractérisé en ce que les bras (10, 11 ; 10', 11') d'un couple sont articulés entre eux par une articulation (12, 12') simple.

6. Hayon élévateur rétractable selon la revendication 5,
caractérisé en ce que l'articulation (12, 12') simple comprend des moyens de butée (10₁, 10'₁) limitant son débattement en position de travail.

7. Hayon élévateur rétractable selon l'une des revendications 1 à 6,
caractérisé en ce que des moyens de guidage sont associés à un couple de bras de manière à guider le pivotement desdits bras autour de leurs articulations (12, 17, 18).

8. Hayon élévateur rétractable selon la revendication 7,
caractérisé en ce que les moyens de guidage sont constitués par une première bielle (30, 30') s'étendant parallèlement à un bras (10, 10') du couple de bras (10, 11 ; 10', 11'), ladite bielle (30, 30') étant montée pivotante autour d'un axe d'articulation (31, 31') fixe par rapport au véhicule et autour d'un axe d'articulation (32, 32') défini sur un flasque d'articulation (33, 33') monté sur l'articulation (12, 12') des deux bras (10, 11 ; 10', 11') et par une seconde bielle (34, 34') s'étendant parallèlement à l'autre bras (11, 11') du couple de bras (10, 11 ; 10', 11'), ladite seconde bielle (34, 34') étant pivotante autour d'un axe d'articulation (35, 35') défini sur le flasque d'articulation (33, 33') et d'un axe d'articulation (36, 36') défini sur la plate-forme (2).

9. Hayon élévateur rétractable selon l'une des revendications 1 à 8,
caractérisé en ce qu'un vérin double (20) est interposé entre les bras homologues (10, 10' ; 11, 11') des couples, chaque tige (20, 20') du vérin double (21) étant articulée (19, 19') sur l'un des bras homologues (10, 10' ; 11, 11').

10. Hayon élévateur rétractable selon la revendication 1,
caractérisé en ce que l'organe de levage comporte deux couples de bras (10, 11 ; 10', 11'), le bras (10) le plus proche du véhicule de l'un des couples de bras étant soumis à l'action du vérin (26) tandis que le corps d'un second vérin (27) est également monté articulé autour d'un axe (270) parallèle à l'axe d'articulation (12) des deux bras (10, 11) sur ledit bras (10) et dont la tige est articulée à son extrémité libre sur l'une (41) des branches (41, 42) d'un compas (40) formé de deux branches (41, 42) dont les extrémités libres sont montées respectivement sur un bras du couple de bras (10, 11), une barre de guidage (28) s'étendant articulée entre deux bras (10, 10') homologues des deux couples, l'actionnement des vérins (26, 27) permettant le pivotement des bras du couple (10, 11) autour de leur axe d'articulation (12) ainsi que celui de l'autre couple (10', 11') autour de leur axe d'articulation (12') par l'intermédiaire de la barre de guidage (28).
